# EUROPÄISCHE PATENTANMELDUNG

(11) **EP 2 574 893 A2**
(43) Veröffentlichungstag der Anmeldung: **03.04.2013**
(21) Anmeldenummer: 12185630.6
(22) Anmeldetag: 24.09.2012
(51) Int. Cl.: G01K 13/00, G01F 23/296

(54) **Verfahren und Vorrichtung zur Temperaturmessung in einem Wärmespeicher**

(30) Priorität: 28.09.2011 DE 102011115075
(71) Anmelder: ROBERT BOSCH GMBH, 70442 Stuttgart (DE)
(72) Erfinder: Maun, Alexander, 35415 Pohlheim (DE); Schneider, Marcel, 35457 Lollar (DE); Scherer, Monika, 35396 Giessen (DE); Nicolai, Jurjen, 61440 Oberursel (Taunus) (DE); Bauer, Christian, 35041 Marburg (DE); Helzel, Stefan, 35232 Dautphetal (DE); Arndt, Michael, 35396 Giessen (DE)

(57) **Zusammenfassung**

Die Erfindung betrifft ein Verfahren zur Temperaturmessung in einem Wärmespeicher (1), mit einer dichteabhängigen Temperaturschichtung in einem mit Flüssigkeit gefüllten Speicherbehälter sowie mindestens einem Temperatursensor (2) im oberen Bereich des Wärmespeichers (1) und einer dafür vorgesehenen Regeleinrichtung, für die Erfassung, Verarbeitung und/oder Weiterleitung von charakteristischen Messwerten des Speichers und/oder für dessen Aufheizung.

Der Erfindung liegt daher die Aufgabe zugrunde, ein Verfahren zur flexiblen Temperaturmessung in einem Wärmespeicher zu schaffen, welches die Nachteile im Stand der Technik überwindet.

Das erfindungsgemäße Verfahren ist dadurch gekennzeichnet, dass ein Ultraschallsensor (3) im Speicherbehälter angeordnet ist und Impulse (7) aussendet, die an einer einer Temperaturdifferenz entsprechenden Grenzfläche (4) mindestens teilweise reflektiert werden.

## Beschreibung

Die Erfindung betrifft ein Verfahren zur Temperaturmessung in einem Wärmespeicher nach dem Oberbegriff des Patentanspruches 1 sowie eine Durchführung des Verfahren gemäß dem Patentanspruch 9.

Wärmespeicher kommen bei Heizungsanlagen als sogenannte Pufferspeicher zur Anwendung, wenn Wärmeproduktion und Wärmebedarf nicht zeitgleich möglich sind. Dies ist beispielsweise in Verbindung mit Solaranlagen und Festbrennstoffkesseln der Fall. Für eine effektive Wärmenutzung spielt das Temperaturniveau im Wärmespeicher eine entscheidende Rolle: Je höher die Wärmeträgertemperatur, desto vielfältiger sind die Nutzungsmöglichkeiten.

Die Zu- und Abfuhr von Wasser bzw. Wärme erfolgt bei bekannten Lösungen über Stutzen in unterschiedlichen Höhenlagen zum Anschließen von Leitungen zu oder von mindestens einem Heizgerät sowie zu oder von mindestens einem Wärmeverbraucher. Dabei soll die vorhandene Temperaturschichtung im Speicherbehälter möglichst beibehalten werden. Es ist daher üblich, dass wärmeres Vorlaufwasser von einem Heizgerät im oberen Bereich eingespeist und kühleres Rücklaufwasser im unteren Bereich entnommen wird. Genauso wird zur Versorgung eines Wärmeverbrauchers kühleres Rücklaufwasser im unteren Bereich eingespeist und wärmeres Vorlaufwasser im oberen Bereich entnommen.

Ansonsten würde eine Durchmischung des Wasserinhalts einerseits zu einer deutlich geringeren Entnahmetemperatur führen und andererseits würde das Einschichten von Wärme durch eine zu geringe Temperaturdifferenz erschwert. Außerdem würden Energieverluste entstehen, wenn beispielsweise relativ warmes Wasser in die unteren, kühleren Zonen des Speicherbehälters gelangt und zunächst das gesamte Volumen aufgeheizt werden muss, um die gewünschte Entnahmetemperatur im oberen Bereich zur Verfügung zu stellen. Weiterhin gibt es Wärmespeicher als Warmwasserspeicher, insbesondere zur Trinkwassererwärmung.

Zur Warmwasserladung benötigen Warmwassersysteme, die einen Warmwasserspeicher nutzen, mindestens einen Temperatursensor im oberen Bereich des Speichers, über den die Erfordernis einer Nachladung erfasst wird. Jedoch bedarf es zur optimalen Nachladung genauerer Informationen über den Wärmeinhalt des Speichers, um eine verbrauchsgerechte Regelung zu realisieren. Je nachdem welche Anforderungen an einen Warmwasserspeicher bestehen, kann das Wasser im Speicherbehälter mehr oder weniger erwärmt werden. Dabei kommt es darauf an, ob der Benutzer kontinuierlich warmes Wasser benötigt oder der Warmwasserverbrauch eingeschränkt ist. Auch ist es in manchen Fällen nötig, die Nachladung an die dynamische Benutzung des Verbrauchers anzupassen.

Deshalb werden heutzutage meist mehrere diskrete Temperatursensoren genutzt, um den Temperaturverlauf über die Speicherhöhe zu erfassen. Dabei lässt sich die Wärmemenge umso genauer bestimmen, je größer die Anzahl der verwendeten Temperatursensoren ist, da über eine weite Strecke die Temperatur bestimmt und die Nachladung anhand der Informationen der Temperatursensoren angepasst werden kann. Viele Einzelsensoren können jedoch die Komplexität und Kosten des Aufbaus erhöhen.

Aus der DE 10 2009 051 304 B3 ist ein Verfahren bekannt, bei dem mittels einer frequenzabhängigen Widerstandsmessung mindestens eines Sensors ein Temperaturprofil in einem Speicher gemessen werden kann. Anhand der Impedanz wird eine Temperatur zu einer entsprechenden Höhe des Speichers zugeordnet, sodass ein Temperaturprofil über die Höhe erfasst wird. Der Sensor ist dabei als sich in Höhenrichtung des Speichers erstreckender Wechselstromwiderstand ausgebildet. Dieser Sensor muss sich baulich jedoch über einen weiten Bereich der Speicherhöhe erstrecken, da nur bei direktem thermischen Kontakt mit dem Speichermedium eine Temperaturaussage an diesem Ort getroffen werden kann.

Weiter ist aus der DE 43 07 635 C2 ein Verfahren bekannt, bei dem ein Ultraschallgeber am Boden eines Flüssigkeitsbehälters montiert ist und nach oben in Richtung einer Flüssigkeits-Luft-Grenzfläche einen Impuls ausstrahlt. Dabei wird die Ultraschallenergie von dieser Grenzfläche der Aggregatzustände nach unten zum Ulraschallgeber zurückreflektiert. Durch Messung der Zeit zwischen der Aussendung und dem Empfang eines Impulses ist es dann möglich, den Abstand zwischen dem Ultraschallgeber und der Flüssigkeits-Luft-Grenzfläche und hierdurch die Tiefe der Flüssigkeit zu messen. Bei diesem Verfahren wird jedoch nur die Grenzfläche zwischen Flüssigkeit und umgebender Luft zur Messung genutzt. Der Abstand innerhalb einer Flüssigkeit, zwischen verschiedenen Temperaturzuständen, kann mit diesem Verfahren nicht ermittelt werden.

Der Erfindung liegt daher die Aufgabe zugrunde, ein Verfahren zur flexiblen Temperaturmessung in einem Wärmespeicher zu schaffen, welches die Nachteile im Stand der Technik überwindet.

Erfindungsgemäß wird dies durch die Gegenstände mit den Merkmalen des Patentanspruches 1 gelöst. Vorteilhafte Weiterbildungen sind den Unteransprüchen zu entnehmen.

Das erfindungsgemäße Verfahren zur Temperaturmessung in einem Wärmespeicher, mit einer dichteabhängigen Temperaturschichtung in einem mit Flüssigkeit gefüllten Speicherbehälter sowie mindestens einem Temperatursensor im oberen Bereich des Wärmespeichers und einer dafür vorgesehenen Regeleinrichtung für die Erfassung, Verarbeitung und/oder Weiterleitung von charakteristischen Messwerten des Speichers und/oder für dessen Aufheizung ist **dadurch gekennzeichnet, dass** ein Ultraschallsensor im Speicherbehälter angeordnet ist und Impulse aussendet, die an einer einer Temperaturdifferenz entsprechenden Grenzfläche mindestens teilweise reflektiert werden.

Die einer Temperaturdifferenz entsprechende Grenzfläche im Speicherbehälter wird mittels eines Ultraschallsensors bestimmt, indem ausgesendete Impulse des Sensors an dieser Grenzfläche abprallen und wieder in Richtung des Ultraschallsensors reflektiert werden. Dabei weist das Wasser im Vorwärmbereich eine höhere Dichte auf als das Wasser im Vorratsbereich und die ausgesendeten Impulse werden an dieser ausgebildeten Grenzfläche reflektiert.

Vorteilhafterweise wird die Höhenlage der einer Temperatur entsprechenden Grenzfläche über die Reichweite der Impulse eingestellt.

Durch die Ermittlung der Zeit zwischen Aussendung der Impulse und Empfang des reflektierten Anteils wird der Weg bis zur Grenzfläche bestimmt. Diese Messstrecke wird dann dazu verwendet, um das Volumen im Speicher zu bestimmen, das durch Nachladung erwärmt werden soll.

Durch eine vorgebbare Speichergeometrie wird der gesamte Wärmeinhalt und/oder der Wärmeinhalt in einem Vorratsbereich, welcher vom oberen Wärmespeicherbereich gebildet wird und nach unten hin durch die Grenzfläche eingefasst ist, in einer dafür vorgesehenen Regeleinrichtung berechnet.

Durch einen Sensor im oberen Bereich des Speicherbehälters wird die Temperatur bestimmt. Diese ermittelten Messwerte werden dann mit einem vorgebbaren Temperatur-Sollwert verglichen. Auch werden die Messwerte des Ultraschallsensors mit einem vorgebbaren Einschaltwert für eine Beheizungseinrichtung zur Aufheizung des Wärmespeichers verglichen. Das Messprinzip erlaubt eine kontinuierliche Ortsauflösung, die nicht durch die Anzahl einzelner Sensorelemente bedingt ist und kann durch seine hohe Zeitauflösung auch dynamische Vorgänge abbilden.

Mit der bekannten Speichergeometrie und mit den Messwerten des Temperatursensors kann das Warmwasserladevolumen im Vorratsbereich variabel mittels des Ultraschallsensors angepasst und für bedarfsabhängige Regelstrategien nutzbar gemacht werden. Somit kann die Regelsteuerung auf die unterschiedlichen Bedürfnisse des Benutzers reagieren. Durch eine Komfort- oder Sparregulierung ist eine benutzerabhängige und flexible Einstellung möglich. Dabei kann beispielsweise im Fall eines im unteren Bereich des Wärmespeichers angebrachten Ultraschallsensors in der Spareinstellung eine weite Strecke über den Ultraschallsensor gemessen und somit ein geringer Vorrat des Speichers erwärmt werden. Diese Einstellung ist somit für Benutzer mit niedrigem Warmwasserverbrauch geeignet. Dagegen wird bei der Komforteinstellung eine kurze Strecke gemessen und ein großer Vorrat innerhalb des Speichers erwärmt. Daher ist diese Einstellung für Benutzer mit einem hohen Warmwasserverbrauch ausgelegt.

In einer vorteilhaften Ausführung ist der Ultraschallsensor vertikal wirkend im Bodenbereich des Speichers angeordnet, wobei der Temperatursensor im oberen Bereich des Speichers angebracht ist. Die Messung findet dann vom Vorwärm- zum Vorratsbereich hin statt.

In einer weiteren Ausführungsform wird der Ultraschallsensor im Deckelbereich des Speichers angeordnet, wobei der Temperatursensor weiterhin im oberen Bereich des Speichers angebracht ist. Bei der Messung mittels Ultraschall wird dann die Grenzfläche vom Vorratszum Vorwärmebereich bestimmt.

Das erfindungsgemäße Verfahren ermöglicht es, die Temperatur in den dichteabhängigen Temperaturschichtungen einer Flüssigkeit zu bestimmen, ohne eine Vielzahl von Einzeltemperatursensoren einzusetzen und somit den Aufbau komplexer zu gestallten. Nach Bestimmung der Temperatur im Grenzgebiet vom Vorwärm- zum Vorratsbereich, kann je nach Anforderungen und Komfortansprüchen des Benutzers eine Nachladung des Wärmespeichers entsprechend des Warmwasserverbrauchs erfolgen. Durch die kontinuierliche Ortsauflösung und die hohe Zeitauflösung sind auch dynamische Vorgänge regelbar. Denkbar ist es somit auch, die Temperaturdifferenz über die Speicherhöhe abzutasten und zu verarbeiten. Beispielsweise für die Bestimmung der insgesamt gespeicherten Wärmekapazität. Weiterhin gestaltet sich eine Weiterverarbeitung des benötigten Signals sehr einfach, da nur ein Eingang für den Ultraschallsensor an der Regeleinrichtung vorgesehen werden muss.

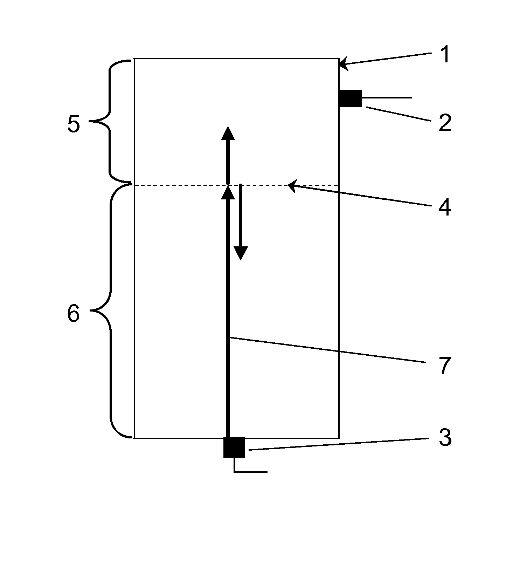

Die Zeichnung stellt ein Ausführungsbeispiel der Erfindung dar und zeigt in einer einzigen Figur schematisch den prinzipiellen Aufbau eines Warmwasserspeichers mit einem Ultraschallsensor und einem Temperatursensor.

Die Figur zeigt einen Wärmespeicher 1, mit einer dichteabhängigen Temperaturschichtung in einem mit Wasser gefüllten Speicherbehälter sowie mindestens einen Temperatursensor 2 im oberen Bereich des Wärmespeichers 1. Ein Ultraschallsensor 3 ist im Bodenbereich des Speicherbehälters angeordnet und sendet Impulse 7 aus, die an einer Grenzfläche 4 zwischen einem Vorratsbereich 5 und einem Vorwärmbereich 6 teilweise reflektiert werden. Die einer Temperaturdifferenz entsprechende Grenzfläche 4 wird in dem Speicherbehälter mittels eines Ultraschallsensors 3 bestimmt, indem ausgesendete Impulse 7 des Ultraschallsensors 3 an dieser Grenzfläche 4 abprallen und wieder in Richtung des Ultraschallsensors 3 reflektiert werden.

Die Höhenlage der einer Temperaturdifferenz entsprechenden Grenzfläche 4 wird dabei über die Laufzeit der Impulse 7 eingestellt.

Durch die Ermittlung der Zeit wird zwischen Aussendung der Impulse 7 und Empfang des reflektierten Anteils der Weg bis zur Grenzfläche 4 bestimmt.

Die Messwerte des Temperatursensors 2 im oberen Bereich werden mit einem vorgebbaren Temperatur-Sollwert verglichen, und die Messwerte des Ultraschallsensors 3 mit einem vorgebbaren Einschaltwert für eine Beheizungseinrichtung zur Aufheizung des Wärmespeichers 1. Durch Kenntnis der Speichergeometrie und den Messwerten des Temperatursensors 2 wird das Warmwasserladevolumen im Vorratsbereich 5 variabel mittels des Ultraschallsensors 3 angepasst und für bedarfsabhängige Regelstrategien genutzt.

## Patentansprüche

1. Verfahren zur Temperaturmessung in einem Wärmespeicher (1), mit einer dichteabhängigen Temperaturschichtung in einem mit Flüssigkeit gefüllten Speicherbehälter sowie mindestens einem Temperatursensor (2) im oberen Bereich des Wärmespeichers (1) und einer dafür vorgesehenen Regeleinrichtung, für die Erfassung, Verarbeitung und/oder Weiterleitung von charakteristischen Messwerten des Speichers und/oder für dessen Aufheizung,
**dadurch gekennzeichnet, dass** ein Ultraschallsensor (3) im Speicherbehälter angeordnet ist und Impulse (7) aussendet, die an einer einer Temperaturdifferenz entsprechenden Grenzfläche (4) mindestens teilweise reflektiert werden.

2. Verfahren nach Anspruch 1,
**dadurch gekennzeichnet, dass** die einer Temperaturdifferenz entsprechende Grenzfläche (4) im Speicherbehälter mittels eines Ultraschallsensors (3) bestimmt wird, indem ausgesendete Impulse (7) des Ultraschallsensors (3) an dieser Grenzfläche (4) teilweise wieder in Richtung des Ultraschallsensors (3) reflektiert werden.

3. Verfahren nach einem der Ansprüche1 oder 2,
**dadurch gekennzeichnet, dass** die Höhenlage der einer Temperaturdifferenz entsprechenden Grenzfläche (4) über die Laufzeit der Impulse (7) einstellbar ist.

4. Verfahren nach einem der Ansprüche 1 bis 3,
**dadurch gekennzeichnet, dass** durch die Ermittlung der Zeit zwischen Aussendung der Impulse (7) und Empfang des reflektierten Anteils der Weg bis zur Grenzfläche (4) bestimmt wird.

5. Verfahren nach einem der Ansprüche 1 bis 4,
**dadurch gekennzeichnet, dass** durch eine vorgebbare Speichergeometrie der gesamte Wärmeinhalt und/oder der Wärmeinhalt in einem Vorratsbereich (5), welcher vom oberen Wärmespeicherbereich gebildet wird und nach unten hin durch die Grenzfläche (4) eingefasst ist, in einer dafür vorgesehenen Regeleinrichtung berechnet wird.

6. Verfahren nach einem der Ansprüche 1 bis 5,
**dadurch gekennzeichnet, dass** die Messwerte des Temperatursensors (2) im oberen Bereich mit einem vorgebbaren Temperatur-Sollwert verglichen werden, und dass die Messwerte des Ultraschallsensors (3) mit einem vorgebbaren Einschalttemperaturwert für eine Beheizungseinrichtung zur Aufheizung des Wärmespeichers verglichen werden.

7. Verfahren nach einem der Ansprüche 1 bis 6,
**dadurch gekennzeichnet, dass** mit der bekannten Speichergeometrie und mit den Messwerten des Temperatursensors (2) das Warmwasserladevolumen im Vorratsbereich (5) variabel mittels des Ultraschallsensors (3) anpassbar und für bedarfsabhängige Regelstrategien nutzbar ist.

8. Verfahren nach einem der Ansprüche 1 bis 7,
**dadurch gekennzeichnet, dass** eine Komfort- oder Sparregulierung benutzerabhängig flexibel einstellbar ist, wobei im Fall eines im unteren Bereich des Wärmespeichers (1) angebrachten Ultraschallsensors (3) in der Spareinstellung eine weite Strecke gemessen wird und somit ein geringer Vorrat des Wärmespeichers (1) erwärmt wird, und wobei in der Komforteinstellung eine kurze Strecke gemessen wird und somit ein großer Vorrat des Wärmespeichers (1) erwärmt wird.

9. Vorrichtung zur Durchführung des Verfahrens gemäß der Ansprüche 1 bis 8,
**dadurch gekennzeichnet, dass** der Ultraschallsensor (3) vertikal wirkend, wahlweise im Boden- oder im Deckelbereich des Wärmespeichers (1) angeordnet ist.
